# NEUE EUROPÄISCHE PATENTSCHRIFT

(11) **EP 0 676 073 B2**
(45) Veröffentlichungstag und Bekanntmachung des Hinweises auf die Entscheidung über den Einspruch: **19.01.2000**
(45) Hinweis auf die Patenterteilung: 13.11.1996
(21) Anmeldenummer: 94903866.5
(22) Anmeldetag: 22.12.1993
(51) Int. Cl.: G06K 19/067, G06K 19/10

(54) **SYSTEM ZUR ECHTHEITSPRÜFUNG EINES DATENTRÄGERS**
SYSTEM FOR CHECKING THE VALIDITY OF A DATA CARRIER
SYSTEME PERMETTANT DE VERIFIER LA VALIDITE D'UN SUPPORT DE DONNEES

(30) Priorität: 23.12.1992 DE 4243888
(43) Veröffentlichungstag der Anmeldung: 11.10.1995
(73) Patentinhaber: GAO Gesellschaft für Automation und Organisation mbH, D-81369 München (DE)
(72) Erfinder: LAMLA, Michael, D-80995 München (DE)
(74) Vertreter: Klunker . Schmitt-Nilson . Hirsch
(86) Internationale Anmeldenummer: EP9303668
(87) Internationale Veröffentlichungsnummer: WO9415318

(56) Entgegenhaltungen:
- EP-A- 0 243 873
- EP-A- 0 313 769
- EP-A- 0 349 412
- DE-A- 3 526 061
- FR-A- 2 463 457
- FR-A- 2 665 989
- US-A- 4 841 133

## Beschreibung

Die Erfindung betrifft ein System zur Prüfung der Echtheit eines Datenträgers gemäß dem Oberbegriff des Anspruchs 1.

Ein System dieser Art ist z. B. aus der EP-A1 0 313 967 bekannt. Aus dieser Druckschrift ist es bekannt, bei der Chipherstellung gezielt Einfluß auf die physikalische Feinstruktur des IC zu nehmen und somit bestimmte Strukturen auf bzw. in den integrierten Schaltkreis einzubringen, die als den Schaltkreis kennzeichnende physikalische Eigenschaft auswertbar sind. In diesem Zusammenhang wird in dieser Druckschrift vorgeschlagen, den Chip mit einer metallischen Beschichtung mit einer wirren Flächenstruktur zu versehen, die über eine Widerstandsmessung an mehreren Orten abtastbar ist, wobei das dabei erhaltene Widerstandsprofil in Form von Kenndaten zur Echtheitsbestimmung des Datenträgers abgespeichert wird. Ein externer Zugriff auf den Kenndatenspeicher ist nach dem Zünden einer Sicherung, z. B. nach der Initialisierungsphase, nicht mehr moglich.

Das o. g. System hat jedoch den Nachteil, daß das Widerstandsprofil nicht nur meßtechnisch aufwendig und schwierig ermittelbar, sondern unter Umständen nicht immer eindeutig ist, wodurch die Zuverlässigkeit des Prüfverfahrens beeinträchtigt ist Weiterhin können mit dem bekannten Verfahren keine fehlerhaften Zündvorgänge, bei denen die Sicherung nicht ordnungsgemäß vom elektrisch leitenden in den nichtleitenden Zustand gebracht wurde oder eine nachträgliche Manipulation an einer ordnungsgemäß gezündeten Sicherung festgestellt werden, wodurch in beiden Fällen ein unerlaubter Zugriff auf den Kenndatenspeicher moglich ware.

Aus der US-A-4 841 133 ist ein Datenträger bekannt, der wenigstens einen integrierten Schaltkreis mit Speichereinheiten und Logikeinheiten sowie Kommunikationselementen aufweist, wobei auf dem integrierten Schaltkreis eine separate Schaltung vorhanden ist, deren physikalische Eigenschaft aus einem irreversibel einstellbaren elektrischen Zustand besteht, die zur Erstellung eines Kenndatenwertes für den Datenträger verwendet wird. Um bei diesem Datenträger eine Programmierung der Speichereinheit nur dem berechtigten Benutzer zu erlauben, liefert der Hersteller die Datenträger im Transport Modus aus, in dem die Speichereinheit mit einem Transport Code programmiert ist. Um die Speichereinheit erneut zu programmieren, muß der Benutzer den separat mitgelieferten Transport Code extern in den Datenträger eingeben, und nur wenn der eingegebene gleich dem programmierten Transport Code ist, wird die Speichereinheit zum Neuprogrammieren freigegeben. Dabei geschieht die Freigabe dadurch, indem bei Gleichheit die eine der beiden Sicherungen der separaten Schaltung irreversibel durchgeschmolzen wird, und daß bei Ungleichheit die andere der beiden Sicherungen der separaten Schaltung irreversibel durchgeschmolzen wird. Auf diese Weise wird ein Kenndatenwert erzeugt, der bei Gleichheit einen "user mode" anzeigt, in dem es dem Benutzer erlaubt ist, die Speichereinheit umzuprogrammieren, und der bei Ungleichheit einen "blocked mode" anzeigt, in dem es dem Benutzer verwehrt wird, die Speichereinheit umzuprogrammieren.

Die Aufgabe der Erfindung besteht nun darin, ein Verfahren zur Echtheitsprüfung von Datenträgern vorzuschlagen, das eine zuverlässigere Echtheitsbestimmung und einen besseren Schutz sensitiver Bereiche des Datenträgers ermöglicht, wobei die durch den Integrierten Schaltkreis bestimmte physikalische Eigenschaft mit geringem Aufwand meßtechnisch erfaßbar sein soll.

Die Aufgabe wird erfindungsgemäß durch die im kennzeichnenden Teil des Ansprüche 1 und 16 angegebenen Merkmale gelöst.

Die Erfindung zeichnet sich dadurch aus, daß auf dem integrierten Schaltkreis des Datenträgers eine separate Schaltung vorgesehen ist, welche vom Halbleiterhersteller durch eine geringfügige Designänderung des integrierten Schaltkreises realisiert wird. Die Schaltung weist einen den Schaltkreis kennzeichnenden irreversibel eingestellten elektrischen Zustand auf, der zur Erstellung eines Kenndatenwertes für den Datenträger verwendet und zur Echtheitsbestimmung ausgewertet wird.

In einer ersten Ausführungsform umfaßt die Schaltung des integrierten Schaltkreises wenigstens ein aus passiven Bauelementen bestehendes Netzwerk und kann zusätzlich eine Steuerlogik zur Ansteuerung von Schaltelementen enthalten. In einem bevorzugten Ausführungsbeispiel ist dieses Netzwerk als Widerstandsreihe zwischen einem äußeren freien Kontaktanschluß, der als Meßanschluß dient, und dem Masseanschluß des Datenträgers ausgeführt. Zur Codierung dieser Widerstandsreihe, die aus binominal aufgebauten Widerständen bestehen kann, sind zu den in Reihe geschalteten Widerständen leweils parallel Sicherungen geschaltet, die entsprechend der gewünschten Codierung durchgebrannt werden. Das Druchbrennen der Sicherungen ist hierbei nur im Testmodus, d h. nachdem der Chip getestet und für gut befunden wurde, möglich. Beim Durchbrennen der Sicherungen wird ein entsprechend hoher Strom an den freien außeren Meßanschluß gegen Masse getrieben, wobei die Steuerlogik gewährleistet, daß nur die Sicherungen durchgebrannt werden, bei denen die dazu parallel geschalteten Schalter entsprechend der gewünschten Codierung geoffnet sind. Nach Codierung der Widerstandsreihe kann eine zwischen der Steuerlogik und den Schaltelementen befindliche, ohne spezielle Hilfsmittel nicht erkennbare. Sicherung durchgebrannt werden, um zu verhindern, daß die Steuerlogik nochmals im Testmodus betrieben werden kann. Somit ist gewährleistet, daß die Codierung des Netzwerkes nur innerhalb des Testmodus vom Halbleiterhersteller realisiert werden kann. Die Codierung kann beispielsweise eine fortlaufende Nummer ergeben, d. h. eine für den integrierten Schaltkreis individuelle Kennung oder aber auch ein Klassenmerkmal für den integrierten Schaltkreis darstellen. Selbstverstandlich erkennt der Fachmann, daß die Erfindung nicht auf die Realisierung einer Widerstandsreihe beschränkt ist, sondern vielmehr auch andere passive Bauelemente, wie beispielsweise Kondensatoren oder Induktivitäten für das die Schaltung kennzeichnende Netzwerk verwendet werden können.

Alternativ kann anstelle einer zusätzlichen Steuerlogik für die Schaltelemente auch für jeden Widerstand mit jeweils parallel geschalteter Sicherung ein Testanschluß (test pad) vorgesehen werden. Diese stehen beispielsweise nach der Produktion und während des Wafertests zur Verfügung. Nachdem der Chip getestet und für gut befunden wurde, treibt der Halbleiterhersteller einen hohen Strom auf die Testanschlüsse und zwar so, daß die Kombination der durchgebrannten Sicherungen die gewünschte Codierung der Widerstandsreihe ergeben. Die Umschaltung von der Test- in die Benutzerbetriebsart kann durch Zünden einer Sicherung und/oder durch Programmierung von EEPROM- oder EPROM-Zellen erfolgen und ist irreversibel.

Bei der ersten Ausführungsform kann die Echtheitsprüfung dadurch erfolgen, daß die physikalische Eigenschaft des Netzwerkes, beispielsweise der Gesamtwiderstandswert einer binominal codierten Widerstandsreihe, von einem externen Gerät gemessen und anschließend digitalisiert wird, um den Digitalwert mit Hilfe eines im Gerät gespeicherten geheimen Schlüssels zu verschlüsseln. Dieser vom Gerät verschlüsselte mit der physikalischen Eigenschaft des Netzwerkes in Verbindung stehende Digitalwert wird mit einem von dem Datenträger empfangenen Kenndatenwert verglichen. Der in einem Speicherbereich des Datenträgers enthaltene Kenndatenwert gibt ebenfalls die physikalische Eigenschaft des Netzwerkes in verschlüsselter Form wieder.

Dieser Kenndatenwert kann z. B. bei der Personalisierung des Datenträgers in einen Speicher des Datenträgers eingeschrieben werden. Das Einschreiben des Kenndatenwertes und auch anderer persönlicher sensitiver Daten erfolgt bei der Personalisierung in einer gesicherten Umgebung, womit gewährleistet ist, daß nur eine dazu autorisierte Person befugt ist, die Personalisierung der Datenträger vorzunehmen. Dies kann beispielsweise in einfacher Weise dadurch erreicht werden, daß die Bedienungsperson sich gegenüber dem Gerät durch Eingabe eines Geheimcodes ausweisen muß. Das Personalisierungsgerät verifiziert vor Inbetriebnahme, ob der eingegebene Code mit dem im Gerät gespeicherten übereinstimmt. Um die Personalisierungsdaten, wie z. B. Transaktionslimit, PIN etc., gegen Duplizierung zu schützen, können diese Daten bei der Personalisierung des Datenträgers mit der gemessenen physikalischen Eigenschaft des Netzwerkes logisch verknüpft werden und das Ergebnis der logischen Verknüpfung kann in den Speicher des Datenträgers von dem Personalisierungsgerät eingeschrieben werden.

In einer Weiterbildung der Erfindung kann auch ein Schaltelement vorgesehen werden, welches unter Steuerung einer Logikeinheit des Datenträgers die physikalische Eigenschaft des Netzwerkes zu einem vorgegebenen Zeitpunkt und für eine vorgegebene Dauer zur externen Messung freigibt. Dies hat den Vorteil, daß die als separates Netzwerk ausgeführte Echtheitsstruktur des integrierten Schaltkreises nur für eine bestimmte Zeitdauer für eine externe Messung zur Verfügung steht und außerhalb dieser Zeitdauer die Echtheitsstruktur von außen nicht feststellbar und somit verborgen ist. Beispielsweise gibt die Logikeinheit des Datenträgers die physikalische Eigenschaft des Netzwerkes zur Messung mit dem Empfang eines "Reset"-Signals bis zum Zeitpunkt des von der Karte gesendeten "Answer to Reset" (ATR) frei. Nur innerhalb diesem systemspezifischen Zeitfenster ist die physikalische Eigenschaft des Netzwerkes feststellbar. Selbstverständlich kann der Datenträger vor der Freigabe der physikalischen Eigenschaft des Netzwerkes die Authentizität des mit dem Datenträger in Verbindung stehenden Gerätes prüfen, um sicherzustellen, daß die physikalische Eigenschaft des Netzwerkes- nur gegenüber einem echten, d. h. zur Messung, autorisierten Gerät freigegeben wird. Desweiteren kann das Gerät mit Hilfe einer Zeitmeßeinrichtung verifizieren, ob die Zeitdauer, für die die physikalische Eigenschaft des Netzwerkes von der Logikeinheit des Datenträgers zur Messung freigegeben ist, innerhalb eines systemspezifischen Zeitfensters liegt. Selbstverständlich muß die Wahl eines solchen Zeitfensters immer auch in Abhängigkeit eines zwischen den Kommunikationsteilnehmern vereinbarten Datenaustauschprotokolles erfolgen. Die jeweilige Adaptierung des Zeitfensters an das anwendungsspezifische Datenaustauschprotokoll obliegt dem Wissen und Können eines Fachmanns und wird hier nicht näher beschrieben.

In einer zweiten Ausführungsform umfaßt die Schaltung wenigstens eine Sicherung, deren elektrischer Zustand nach dem Zündvorgang intern im Datenträger überprüft und in Form eines Kenndatenwertes in einem Speicherbereich des Datenträgers gespeichert wird. Der Kenndatenwert kann zur Echtheitsprüfung zur Vorrichtung, die mit dem Datenträger kommuniziert, übertragen oder aber im Bedarfsfall zum Sperren des Datenträgers intem verarbeitet werden. Die Übertragung der Daten an die Vorrichtung wird so vorgenommen, daß kein Rückschluß auf den tatsächlichen elektrischen Zustand der Sicherung möglich ist.

Vorzugsweise erfolgt die Überprüfung der elektrischen Eigenschaft der Sicherung bei jeder Inbetriebnahme des Datenträgers mit einem zur Inbetriebnahme des integrierten Schaltkreises ohnehin notwendigen Signal. Dadurch können fehlerhafte Zündvorgänge, bei denen die Sicherung nicht ordnungsgemäß von dem elektrisch leitenden in den elektrisch nichtleitenden Zustand gebracht wurde, mit geringem technischen Aufwand festgestellt werden. Weiterhin ermöglicht die Erfindung auch die Feststellung späterer Manipulationen an einer ordnungsgemäß gezündeten Sicherung, z. B. Überbrückung der Sicherung mittels Mikrosonden, wobei bei einem fehlerhaften Zündvorgang oder bei einer festgestellten Manipulation der Betrieb des integrierten Schaltkreises intem blockiert wird. Dadurch ist der Datenträger für den Betrüger bei jeder weiteren Verwendung nutzlos. Die Erfindung erlaubt somit einen wirksamen Schutz gegen unerlaubte Manipulationen eines Echtheitsmerkmals eines Datenträgers, wodurch eine zuverlässigere Echtheitsbestimmung des Datenträgers möglich ist.

Weitere Vorteile und vorteilhafte Weiterbildungen sind der Beschreibung der Erfindung anhand der Figuren entnehmbar.

Die Fig. zeigen:
- Fig. 1: einen Datenträger mit integriertem Schaltkreis,
- Fig. 2: die erfindungsgemäße separate Schaltung in Form eines Netzwerkes mit entsprechender Steuerlogik,
- Fig. 3: den Datenträger in Verbindung mit einem Gerät zur Echtheitsprüfung,
- Fig. 4: ein Diagramm zum Ablauf der Echtheitsprüfung eines Datenträgers,
- Fig. 5: ein weiteres Ausführungsbeispiel eines separaten Netzwerkes,
- Fig. 6: einen Datenträger mit Einrichtungen zur internen Prüfung des elektriscshen Zustands einer separaten Schaltung des Schaltkreises.

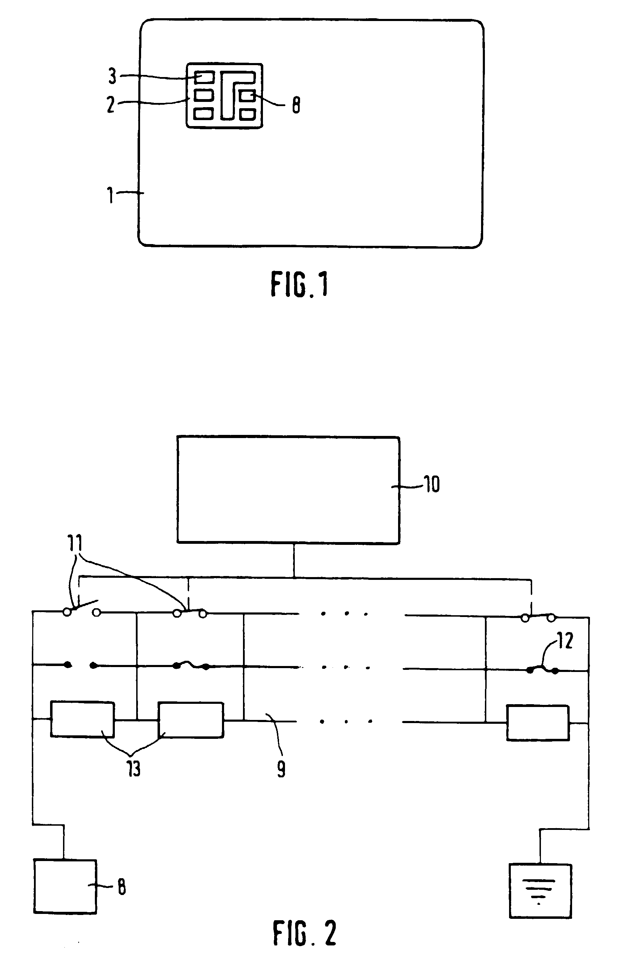

Fig. 1 zeigt einen Datenträger 1, wie er z. B. im bargeldlosen Zahlungsverkehr als Buchungskarte oder als Speicherkarte, wie z. B. als Telefonkarte, Anwendung findet. Der Datenträger weist einen auf einem IC-Modul 2 befindlichen integrierten Schaltkreis (IC) auf, der über die Kontaktflächen 3 mit externen Peripheriegeräten elektrisch verbunden werden kann. Nach neuerem Standard sind sechs Kontakte vorgesehen, wobei im allgemeinen einer der Kontakte nicht belegt ist. Dieser freie Anschluß des IC-Moduls, in den Fig. mit der Position 8 bezeichnet, wird als Meßanschluß zur externen Messung einer physikalischen Eigenschaft des integrierten Schaltkreises genutzt.

Fig. 2 zeigt das erfindungsgemäße separat auf dem integrierten Schaltkreis zwischen dem Anschluß 8 (Meßanschluß) und dem Masseanschluß des Datenträgers realisierte Netzwerk 9, bestehend aus den Widerständen 13. Die Widerstände besitzen von links nach rechts binominal codierte Widerstandswerte, d. h. beginnend mit dem ersten Widerstand z. B. 100 Ohm, zweiter Widerstand 200 Ohm, dritter Widerstand 400 Ohm usw., und sind in Reihe geschaltet. Jedem Widerstand der Widerstandsreihe ist jeweils eine Sicherung 12 und ein Schaltelement 11 parallel geschaltet. Die Schaltelemente können z. B. per Software von einer Steuerlogik 10 angesteuert werden, um die Sicherungen entsprechend der gewünschten Codierung durchzubrennen. Zum Durchbrennen der Sicherung wird ein hoher Strom, z. B. 500 mA, an den Kontakt 8 gegen Masse getrieben, wobei mit Hilfe der von der Steuerlogik gesteuerten Schaltelemente nur die Sicherung durchgebrannt wird, bei der der jeweilig dazu parallel geschaltete Schalter geöffnet ist. Durch Ansteuerung der Schalter kann die gewünschte Codierung, d. h. ein eindeutig unterscheidbarer Gesamtwiderstandswert, für die Widerstandsreihe erhalten werden. Bei der in Fig. 1 dargestellten Schalterstellung ist z. B. nur der erste Schalter geöffnet und alle anderen sind geschlossen, wodurch sich ein Gesamtwiderstandswert von 100 Ohm für die zwischen dem Anschluß 8 und dem Masseanschluß anliegende Widerstandsreihe ergibt. Die binominale Codierung der Widerstandsreihe ermöglicht, daß die Kombination der durchgebrannten Sicherungen einen eindeutigen signifikanden Gesamtwiderstandswert für die Widerstandsreihe ergibt, der als fortlaufende Nummer digital darstellbar ist. Bei Kombination aller möglichen Varianten ergibt sich somit eine fortlaufende Nummer von i = 2ⁿ, wobei n der Anzahl der Widerstände entspricht. Selbstverständlich kann anstelle einer binominal codierten Widerstandsreihe auch eine andere geeignete Codierung gewählt werden. Auch muß der Gesamtwiderstand der Widerstandsreihe nicht für jeden integrierten Schaltkreis individuell sein. Unter Umständen kann es ausreichend sein, diesen klassen spezifisch zu wählen, d. h. ein bestimmtes Fertigungslos von integrierten Schaltkreisen kann mit ein und demselben Gesamtwiderstand einer Widerstandsreihe codiert werden. Nach dem Codieren der Widerstandsreihe, welches im Testmodus, d. h. nachdem der Chip getestet und für gut befunden wurde, stattfindet, kann die Verbindungsleitung zwischen der Steuerlogik 10 und den Schaltelementen 11 durch Zünden einer nicht dargestellten Sicherung unterbrochen werden, um zu verhindern, daß die Steuerlogik nachträglich von unbefugten Dritten im Testmodus betrieben werden kann. Somit ist die Steuerlogik nach dem Codierungsvorgang vom Netzwerk entkoppelt, womit die physikalische Eigenschaft des Netzwerkes irreversibel "eingebrannt" ist. Dies bietet einen hohen Schutz gegenüber Manipulationen seitens unbefugter Dritter.

Im folgenden wird die Personalisierung von Datenträgern mit dem erfindungsgemäßen Netzwerk beschrieben. Zuerst wird die physikalische Eigenschaft des Netzwerkes gemessen und der gemessene Analogwert wird anschließend in einen Digitalwert umgesetzt. Anschließend wird der digitalisierte Meßwert mit Hilfe eines geheimen Schlüssels chiffriert. Dann erfolgt das Einschreiben der chiffrierten physikalischen Eigenschaft des Netzwerkes als Kenndatenwert in die Speichereinheit des Datenträgers. Selbstverständlich können auch andere sensitive Personalisierungsdaten, wie z. B. PIN, Transaktionslimit, mit der gemessenen physikalischen Eigenschaft des Netzwerkes in dem Personalisierungsgerät logisch verknüpft werden, um das Ergebnis der logischen Verknüpfung in eine Speichereinheit des Datenträgers zu schreiben. Als logische Verknüpfung kann z. B. eine EX-OR-Verknüpfung gewählt werden, die von dem Personalisierungsgerät ausgeführt wird.

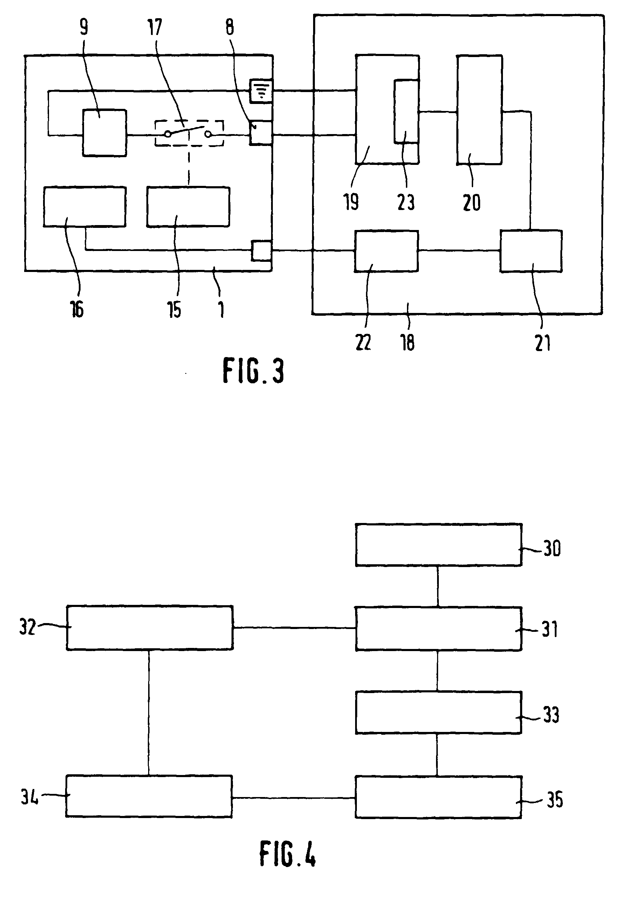

Fig. 3 zeigt in einem vereinfachten Blockschaltbild ein Gerät 18 zur Echtheitsprüfung eines Datenträgers 1 mit dem erfindungsgemäßen Netzwerk 9. Der Datenträger umfaßt neben dem Netzwerk 9 eine Logikeinheit 15, eine Speichereinheit 16 und ein optional vorsehbares Schaltelement 17, welches unter Steuerung der Logikeinheit das Netzwerk für eine vorgegebene Zeitdauer in den zwischen dem Meßkontakt 8 und dem Masseanschluß durch die Meßeinrichtung 19 des Gerätes gebildeten Meßpfad schaltet. Der Übersichtlichkeit wegen wird die Meßeinrichtung 19 als Block dargestellt, der bereits eine Spannungsversorgung z. B. von 10 V und einen Analog-Digital-Wandler 23 zur Umsetzung des analogen Meßwertsignales in einen digitalen Wert beinhaltet. Die digitalisierte gemessene physikalische Eigenschaft des Netzwerkes wird anschlie-ßend von dem Chiffriermittel 20 unter Verwendung eines geheimen Schlüssels, der in dem Chiffriermittel gegen äußeren Zugriff gesichert gespeichert ist, verschlüsselt. Der von der Leseeinrichtung 22 des Gerätes aus der Speichereinheit 16 des Datenträgers ausgelesene Kenndatenwert wird mit dem vom Gerät verschlüsselten Meßergebnis mit Hilfe eines Komparators 21 verglichen. Die Speichereinheit 16 des Datenträgers kann beispielsweise ein EEPROM sein, indem die physikalische Eigenschaft des Netzwerkes in verschlüsselter Form abgespeichert ist. Stimmt die von dem Gerät gemessene physikalische Eigenschaft des Netzwerkes mit dem von der Speichereinheit des Datenträgers ausgelesenen Kenndatenwert überein, so wird der Datenträger als echt erkannt.

Fig. 4 zeigt stark schematisiert den Ablauf zur Echtheitsprüfung eines Datenträgers, der mit einem separaten auf dem integrierten Schaltkreis befindlichen Netzwerk versehen ist, dessen physikalische Eigenschaft meßbar ist. Ist der Datenträger mit dem Prüfgerät über die Kontaktelemente verbunden, so wird in dem Verfahrensschritt 30 vom Gerät zunächst geprüft, ob zwischen dem Masseanschluß und dem Meßanschluß 8 die physikalische Eigenschaft des Netzwerkes, z. B. in Form des Gesamtwiderstandswertes einer Widerstandsreihe, anliegt. Nur wenn das Gerät feststellt, daß der mit der Meßeinrichtung gebildete Meßpfad aufgrund des geöffneten Schaltelementes 17 nicht geschlossen, d. h. hochohmig ist, wird von diesem im Verfahrensschritt 31 ein "Reset"-Signal zum Datenträger gesandt. Mit dem Empfang des "Reset"-Signals wird der Adreßzähler der Logikeinheit 15 in einen definierten Ausgangszustand gesetzt und das Schaltelement geschlossen. Verfahrensschritt 32 zeigt, daß das Schaltelement 17 von der Logikeinheit des Datenträgers per Software-Ansteuerung bis zum Zeitpunkt des "Answer to Reset" (ATR) des Datenträgers geschlossen ist und somit dis physikalische. Eigenschaft des Netzwerkes innerhalb dieses Zeitfensters für eine Messung durch die Meßeinrichtung des Gerätes freigibt. Die Bestimmung der physikalischen Eigenschaft des Netzwerkes, d. h. des Gesamtwiderstandswertes der Widerstandsreihe und die anschließende Verschlüsselung unter Verwendung eines geheimen Schlüssels ist im Verfahrensschritt 33 dargestellt. Im Verfahrensschritt 34 ist das Senden des in der Speichereinheit des Datenträgers enthaltenen Kenndatenwertes als drittes Byte im ATR, der vom Datenträger zum Gerät geschickt wird, dargestellt. Verfahrensschritt 35 zeigt, wie der im dritten Byte des ATR empfangene Kenndatenwert mit der aus dem Verfahrensschritt 33 erhaltenen Meßgröße verglichen wird. Stimmen der von dem Datenträger empfangene Kenndatenwert mit der gemessenen digitalisierten und anschließend chiffrierten physikalischen Eigenschaft des Netzwerkes überein, so wird der Datenträger als echt erkannt. Das Ergebnis der Echtheitsprüfung kann, wenn dies gewünscht wird, auch auf einem Display des Gerätes angezeigt werden.

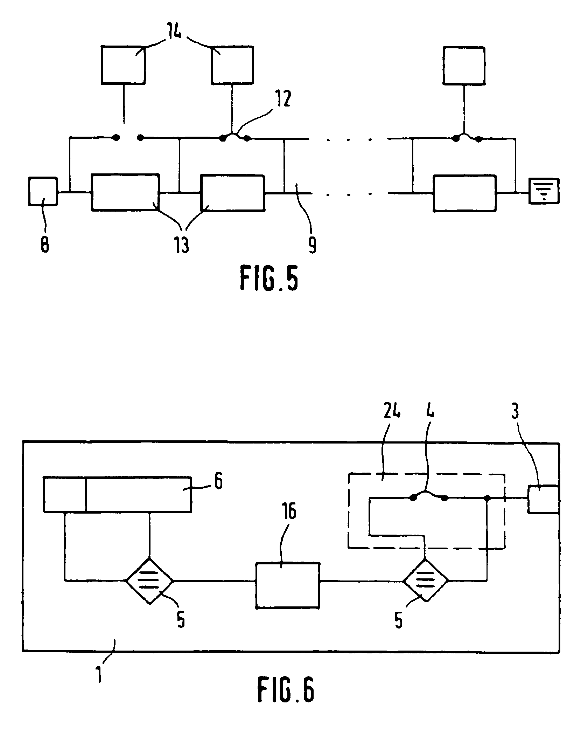

Fig. 5 zeigt ein weiteres Ausführungsbeispiel des erfindungsgemäßen, auf dem integrierten Schaltkreis separat vorhandenen Netzwerkes. Bei dieser Variante existiert für jede Sicherung und jeden Widerstand ein Testanschluß 14, auf den entsprechend der gewünschten Codierung ein hoher Strom, z. B. 500 mA, zum Durchbrennen der Sicherung gegeben wird, so daß die Kombination der durchgebrannten Sicherungen einen für die Widerstandsreihe charakteristischen Gesamtwiderstandswert ergibt. Wie bereits bei der ersten Ausführungsform sind die Sicherungen 12 zu den zwischen dem Meßanschluß 8 und dem Masseanschluß in Reihe geschalteten Widerständen 13 parallel geschaltet. Im Vergleich zur ersten Ausführungsform kann bei dieser Variante auf die Steuerlogik 10 und die Schalter 11 verzichtet werden. Nach dem der Chip getestet und das Netzwerk entsprechend codiert worden ist, werden die Testanschlüsse 14 nach dem Codiervorgang abgeschaltet. Dies kann dadurch erfolgen, daß die Testanschlüsse einfach mechanisch abgetrennt werden. Da bereits nach der Produktion und während des WaferTests die Testkontakte zur Verfügung stehen, kann das auf dem integrierten Schaltkreis separat vorgesehene Netzwerk in einfacher Weise, beispielsweise in Form einer Widerstandsreihe, realisiert werden.

Die Fig. 6 zeigt in einer der Übersichtlichkeit wegen stark schematisierten Darstellung einen Datenträger 1 mit intemen Einrichtungen 5 zur Überprüfung des elektrischen Zustands einer Schaltung 24, die wenigstens eine Sicherung 4, z. B. zum Schutz sensitiver Bereiche des Datenträgers, aufweist. Nachdem der Chip getestet und für gut befunden wurde und nachdem z. B. die gewünschte Codierung des Echtheitsmerkmales des integrierten Schaltkreises erfolgte, wird die Sicherung 4 gezündet, wodurch sie von dem elektrisch leitenden in den elektrisch nichtleitenden Zustand gebracht wird. Selbstverständlich kann die Schaltung 24 auch noch weitere Elemente zur Steuerung des Zündvorgangs aufweisen, die jedoch dem Fachmann geläufig sind und der Einfachheit halber hier nicht dargestellt werden. Zur Überprüfung des elektrischen Zustands der Sicherung 4 wird ein externes Signal, z. B. die Versorgungsspannung oder das Taktsignal des integrierten Schaltkreises, über eine mit dem Eingang der Sicherung elektrisch leitend verbundene äußere Kontaktfläche 3 eingespeist und mit dem am Ausgang der Sicherung empfangenen Signal mittels eines ersten Komparators 5 verglichen. Das Vergleichsergebnis des ersten Komparators wird als Kenndatenwert z. B. nach jedem Anlegen des externen Signals emeut in einen Speicher 16, z. b. RAM, geschrieben. Das im RAM befindliche Vergleichsergebnis kann im "Answer to Reset"-Signal (ATR) vom Datenträger zur Echtheitsbestimmung an ein Kartenlesegerät übertragen werden. Der RAM-Zustand kann bei jedem Betrieb des Datenträgers mittels eines weiteren Komparators 5 mit einer Referenzinformation verglichen werden. Die Referenzinformation stellt z. B. einen für den elektrisch leitenden Zustand der Sicherung 4 repräsentativen Wert dar und ist in einer gegen extemen Zugriff geschützten nichtflüchtigen Speichereinheit 6 des Datenträgers gespeichert. Bei Übereinstimmung mit der Referenzinformation, d. h. wenn nach dem Zündvorgang die Sicherung 4 einen nicht ordnungsgemäßen elektrisch leitenden Zustand annimmt, wird von dem zweiten Komparator 5 ein entsprechendes Sperrsignal erzeugt, das genutzt werden kann, den Schaltkreis irreversibel zu blockieren. Dazu wird beispielsweise in einen bestimmten Bereich des gegen externen Zugriff geschützten nichtflüchtigen Speichers 6 des integrierten Schaltkreises eine die Sperre kennzeichnende Information eingeschrieben. Bei jeder Initialisierung des Datenträgers wird dieser bestimmte Speicherbereich vom integrierten Schaltkreis abgefragt und bei Feststellung der Sperrinformation wird z. B. die Steuereinheit des integrierten Schaltkreises in den Haltezustand oder an den Programmanfang zurückgesezt. In diesem Fall ergeht eine Fehlermeldung, die jedoch keine Rückschlüsse zuläßt auf die Tatsache, daß die Sicherung 4 den nicht ordnungsgemäßen, d. h. elektrisch leitenden Zustand aufweist. Die Fehlermeldung kann z. B. für einen außenstehenden Dritten nicht erkennbar in dem zwischen dem Datenträger und einem Gerät vereinbarten Datenaustauschprotokoll mit erfolgen, z. B. bei einer Buchungskarte im Echtheitssignal oder bei einer Speicherkarte in der Meldung "Einheiten verbraucht".

## Patentansprüche

1. System zur Prüfung der Echtheit eines Datenträgers, umfassend
- einen Datenträger (1), der wenigstens einen integrierten Schaltkreis mit Speichereinheiten (6, 16) und Logikeinheiten (15) sowie Kommunikationselemente (3), aufweist
- eine Vorrichtung (18) die über die Kommunikationselemente (3) zumindest auf Teilbereiche der Speichereinheiten (6, 16) zum Lesen und/oder Schreiben Zugriff hat,
- eine Einrichtung (5, 19) zur Bestimmung einer physikalischen Eigenschaft des integrierten Schaltkreises,
**dadurch gekennezeichnet, daß**
sich auf dem integrierten Schaltkreis eine separate Schaltung (9, 24) befindet, die eine Vielzahl von mehr als vier meßbaren elektrischen Zuständen annehmen kann, die physikalische Eigenschaft in der irreversibelen Einstellung eines signifikanten elektrischen Zustandes der separaten Schaltung (9, 24) besteht und der eingestellte signifikante Zustand zur Bildung eines den Datenträger bezeichnenden Kenndatenwertes verwendet wird.

2. System nach Anspruch 1, dadurch **gekennzeichnet**, daß die Schaltung (9) wenigstens ein aus passiven Bauelementen bestehendes Netzwerk umfaßt.

3. System nach Anspruch 2, dadurch **gekennzeichnet,** daß die gemessene physikalische Eigenschaft der Gesamtwiderstand einer binominal codierten Widerstandsreihe ist.

4. System nach Anspruch 1, dadurch **gekennzeichnet,** daß die Einrichtung (19) zur Messung der physikalischen Eigenschaft Bestandteil der Vorrichtung (18) ist, welche eine Chiffriereinrichtung (20) zum Verschlüsseln der gemessenen physikalischen Eigenschaft der Schaltung (9) aufweist, wobei das Ergebnis der Verschlüsselung in einer Speichereinrichtung (16) des Datenträgers (1) als Kenndatenwert abgespeichert ist.

5. System nach Anspruch 4, dadurch **gekennzeichnet,** daß der Kenndatenwert als drittes Byte im Answer to Reset (ATR) vom Datenträger (1) zur Vorrichtung (18) übertragen wird.

6. System nach Anspruch 5, dadurch **gekennzeichnet**, daß die Vorrichtung (18) einen Komparator (21) zum Vergleich des empfangenen Kenndatenwertes mit der von der Vorrichtung (18) gemessenen und verschlüsselten physikalischen Eigenschaft der Schaltung (9) aufweist, wobei der Vergleich bei jeder Inbetriebnahme des Datenträgers (1) erfolgt.

7. System nach Anspruch 1, dadurch **gekennzeichnet**, daß die physikalische Eigenschaft der Schaltung (9) nur zu einem bestimmten Zeitpunkt für eine vorbestimmte Dauer meßbar ist.

8. System nach Anspruch 7, dadurch **gekennzeichnet**, daß Zeitpunkt und Dauer systemspezifische Parameter sind, die von der Logikeinheit (15) des Datenträgers (1) in Abhängigkeit eines von der Vorrichtung (18) empfangenen Signals gesteuert werden und die Vorrichtung (18) verifiziert, ob diese Paramter vorgegebene Bedingungen erfüllen.

9. System nach Anspruch 8, dadurch **gekennzeichnet,** daß das von der Vorrichtung (18) an den Datenträger (1) gesendete Signal ein Resetsignal ist und die Logikeinrichtung (15) mittels eines Schaltelementes (17) des Datenträgers die physikalische Eigenschaft der Schaltung (9) mit dem Zeitpunkt des empfangenen Resetsignals bis zu dem Zeitpunkt des vom Datenträger zur Vorrichtung gesendeten Answer to reset (ATR) zur externen Messung freigibt.

10. System nach Anspruch 1, dadurch **gekennzeichnet**, daß die Schaltung (24) wenigstens eine Sicherung (4) aufweist, die durch einen Zündvorgang irreversibel vom elektrisch leitenden in den elektrisch nicht leitenden Zustand gebracht wird, wodurch sensitive Breiche des Datenträgers (1) gegen externen Zugriff geschützt sind.

11. System nach Anspruch 10, dadurch **gekennzeichnet**, daß der Datenträger (1) Einrichtungen (5) zur Überprüfung der elektrischen Eigenschaft der Sicherung aufweist, wobei über ein mit dem Eingang der Sicherung (4) verbundenes Kommunikationselement (3) des integrierten Schaltkreises ein externes Signal eingespeist und dieses am Ausgang der Sicherung (4) mit dem eingespeisten Signal verglichen wird und das Vergleichsergebnis als Kenndatenwert in einen Speicherbereich (16) des Datenträgers geschrieben wird.

12. System nach Anspruch 11, dadurch **gekennzeichnet,** daß das externe Signal ein für den Betrieb des integrierten Schaltkreise zwingend notwendiges Signal ist.

13. System nach Anspruch 11, dadurch **gekennzeichnet**, daß bei jeder Inbetriebnahme des Datenträgers (1) der Kenndatenwert im Answer to Reset (ATR) des Datenträgers enthalten ist und zur Echtheitsprüfung an die Vorrichtung (18) übertragen wird.

14. System nach Anspruch 11, dadurch **gekennzeichnet**, daß der Kenndatenwert im integrierten Schaltkreis des Datenträgers (1) mit einer intern gespeicherten Referenzinformation verglichen wird und daß der Betrieb des integrierten Schaltkreises blokkiert wird, wenn ein nicht ordnungsgemäßer elektrischer Zustand der Sicherung (4) festgestellt worden ist.

15. System nach Anspruch 14, dadurch **gekennzeichnet**, daß bei Blockierung des Betriebs des integrierten Schaltkreises vom Datenträger (1) eine Fehlermeldung an die Vorrichtung (18) übertragen wird, die keine Rückschlüsse auf den elektrischen Zustand der Sicherung (4) zuläßt.

16. Datenträger (1), der wenigstens einen integrierten Schaltkreis mit Speichereinheiten (6, 16) und Logikeinheiten (15) sowie Kommunikationselementen (3) aufweist, dadurch **gekennzeichnet**, daß sich auf dem integrierten Schaltkreis eine separate Schaltung (9, 24) befindet, die eine einstellbare und meßbare physikalische Eigenschaft mit einer Vielzahl von mehr als vier möglichen elektrischen Zuständen aufweist, wobei die physikalische Eigenschaft irreversibel auf einem signifikanten elektrischen Zustand einstellbar und dieser zur Erstellung eines den Datenträger bezeichnenden Kenndatenwertes verwenbar ist.

17. Datenträger nach Anspruch 16, dadurch **gekennzeichnet**, daß die Schaltung (9) wenigstens ein aus passiven Bauelementen bestehendes Netzwerk umfaßt.

18. Datenträger nach Anspruch 16, dadurch **gekennzeichnet,** daß die Schaltung (24) wenigstens eine Sicherung (4) aufweist, die durch einen Zündvorgang irreversibel vom elektrisch leitenden in den elektrisch nicht leitenden Zustand gebracht wird, wodurch sensitive Bereiche des Datenträgers (1) gegen externen Zugriff geschützt sind.

19. Datenträger nach Anspruch 18, dadurch **gekennzeichnet,** daß der Datenträger (1) Einrichtungen (5) zur Überprüfung der elektrischen Eigenschaft der Sicherung aufweist.

## Claims

1. A system for testing the authenticity of a data carrier, comprising
- a data carrier (1) having at least one integrated circuit with memory units (6, 16) and logic units (15) as well as communication elements (3),
- an apparatus (18) having access via the communication elements (3) to at least partial areas of the memory units (6, 16) for reading and/or writing,
- means (5, 19) for determining a physical property of the integrated circuit,
characterized in that
- a separate circuit (9, 24) capable of assuming a plurality of more than four measurable electric states is located on the integrated circuit, the physical property consists of the irreversible adjustment of a significant electric state of the separate circuit (9, 24), and the adjusted significant state is used for forming a characteristic value designating the data carrier.

2. The system of claim 1, characterized in that the circuit (9) includes at least one network consisting of passive components.

3. The system of claim 2, characterized in that the measured physical property is the total resistance of a binomially coded resistor string.

4. The system of claim 1, characterized in that the means (19) for measuring the physical property are part of the apparatus (18) which has encrypting means (20) for encoding the measured physical property of the circuit (9), the result of encoding being stored in memory means (16) of the data carrier (1) as a characteristic value.

5. The system of claim 4, characterized in that the characteristic value is transferred from the data carrier (1) to the apparatus (18) as the third byte in the answer to reset (ATR).

6. The system of claim 5, characterized in that the apparatus (18) has a comparator (21) for comparing the received characteristic value with the physical property of the circuit (9) measured and encoded by the apparatus (18), the comparison taking place at each operation of the data carrier (1).

7. The system of claim 1, characterized in that the physical property of the circuit (9) is measurable only at a certain time for a predetermined duration.

8. The system of claim 7, characterized in that time and duration are systemspecific parameters which are controlled by the logic unit (15) of the data carrier (1) in accordance with a signal received from the apparatus (18), and the apparatus (18) verifies whether these parameters fulfill predetermined conditions.

9. The system of claim 8, characterized in that the signal transmitted from the apparatus (18) to the data carrier (1) is a reset signal, and the logic unit (15) releases the physical property of the circuit (9) for external measurement by means of a switching element (17) of the data carrier from the time of the received reset signal up to the time of the answer to reset (ATR) transmitted from the data carrier to the apparatus.

10. The system of claim 1, characterized in that the circuit (24) has at least one fuse (4) which is brought by an ignition irreversibly from the electroconductive to the nonconductive state, thereby protecting sensitive areas of the data carrier (1) from external access.

11. The system of claim 10, characterized in that the data carrier (1) has means (5) for checking the electric property of the fuse, whereby an external signal is fed in via a communication element (3) of the integrated circuit connected with the input of the fuse (4) and this is compared at the output of the fuse (4) with the fed-in signal and the result of comparison is written into a memory area (16) of the data carrier as a characteristic value.

12. The system of claim 11, characterized in that the external signal is a signal absolutely necessary for operating the integrated circuit.

13. The system of claim 11, characterized in that the characteristic value is contained in the answer to reset (ATR) of the data carrier and transferred to the apparatus (18) for authenticity testing at each operation of the data carrier (1).

14. The system of claim 11, characterized in that the characteristic value is compared with internally stored reference information in the integrated circuit of the data carrier (1), and operation of the integrated circuit is blocked if an improper electric state of the fuse (4) has been ascertained.

15. The system of claim 14, characterized in that upon blocked operation of the integrated circuit the data carrier (1) transfers an error message to the apparatus (18) which permits no conclusion to be drawn on the electric state of the fuse (4).

16. A data carrier (1) having at least one integrated circuit with memory units (6, 16) and logic units (15) as well as communication elements (3), characterized in that a separate circuit (9, 24) having an adjustable and measurable physical property with a plurality of more than four possible electric states is located on the integrated circuit, the physical property being adjustable irreversibly to a significant electric state and said state being usable for forming a characteristic value designating the data carrier.

17. The data carrier of claim 16, characterized in that the circuit (9) includes at least one network consisting of passive components.

18. The data carrier of claim 16, characterized in that the circuit (24) has at least one fuse (4) which is brought by an ignition irreversibly from the electroconductive to the nonconductive state, thereby protecting sensitive areas of the data carrier (1) from external access.

19. The data carrier of claim 18, characterized in that the data carrier (1) has means (5) for checking the electric property of the fuse.

## Revendications

1. Système permettant de vérifier la validité d'un support de données comprenant :
- un support de données (1) présentant au moins un circuit intégré comprenant des unités de mémoire (6, 16) et des unités logiques (15), ainsi que des éléments de communication (3),
- un dispositif (18) ayant accès par l'intermédiaire des éléments de communication (3), au moins à des zones partielles des unités de mémoire (6, 16) pour la lecture et/ou l'enregistrement,
- un moyen (5, 19) pour déterminer une propriété physique du circuit intégré,
caractérisé en ce que
un montage séparé (9, 24), qui peut prendre une pluralité de plus de quatre états électriques mesurables, est présent sur le circuit intégré, la propriété physique est constituée par le réglage irréversible d'un état électrique significatif du montage séparé (9, 24) et l'état significatif réglé est utilisé pour générer une valeur caractéristique du support de données.

2. Système selon la revendication 1, caractérisé en ce que le montage (9) comprend au moins un réseau composé de composants passifs.

3. Système selon la revendication 2, caractérisé en ce que la propriété physique mesurée est la résistance totale d'une série de résistances codée de façon binomiale.

4. Système selon la revendication 1, caractérisé en ce que le moyen (19) de mesure de la propriété physique est un composant du dispositif (18), lequel présente un moyen d'encodage (20) pour l'encodage de la propriété physique mesurée du montage (9), le résultat de l'encodage étant stocké dans un moyen de mémoire (16) du support de données (1) comme valeur caractéristique.

5. Système selon la revendication 4, caractérisé en ce que la valeur caractéristique est transmise du support de données (1) au dispositif (18) comme troisième octet de la réponse à la commande de remise à zéro (ATR).

6. Système selon la revendication 5, caractérisé en ce que le dispositif (18) présente un comparateur (21) pour la comparaison de la valeur caractéristique reçue à la propriété physique du montage (9) mesurée et encodée par le dispositif (18), la comparaison se faisant à chaque mise en service du support de données (1).

7. Système selon la revendication 1, caractérisé en ce que la propriété physique du montage (9) ne peut être mesurée qu'à un instant déterminé pendant une durée prédéterminée.

8. Système selon la revendication 7, caractérisé en ce que l'instant et la durée sont des paramètres spécifiques du système, qui sont imposés par l'unité logique (15) du support de données (1) en fonction d'un signal reçu du dispositif (18), et en ce que le dispositif (18) vérifie si ces paramètres remplissent des conditions prédéfinies.

9. Système selon la revendication 8, caractérisé en ce que le signal envoyé du dispositif (18) au support de données (1) est un signal de commande de remise à zéro et en ce que le moyen logique (15) permet, au moyen d'un élément de circuit (17) du support de données, la mesure extérieure de la propriété physique du montage (9), de l'instant de la réception du signal de remise à zéro jusqu'à l'instant de la réponse à la commande de remise à zéro (ATR).

10. Système selon la revendication 1, caractérisé en ce que le montage (24) présente au moins une sécurité (4) qui est modifiée par un processus de grillage irréversible de l'état électrique conducteur à l'état électrique non-conducteur, les zones sensibles du support de données (1) étant ainsi protégées des accès extérieurs.

11. Système selon la revendication 10, caractérisé en ce que le support de données (1) présente des moyens (5) de vérification de la propriété électrique de la sécurité, un élément de communication (3) du circuit intégré connecté à l'entrée de la sécurité (4) enregistrant un signal extérieur et le comparant au signal enregistré à la sortie de la sécurité (4) et le résultat de la comparaison étant enregistré comme valeur caractéristique dans une zone de mémoire (16) du support de données.

12. Système selon la revendication 11, caractérisé en ce que le signal extérieur est un signal indispensable pour le fonctionnement du circuit intégré.

13. Système selon la revendication 11, caractérisé en ce que la valeur caractéristique est contenue dans la réponse à la commande de remise à zéro (ATR) du support de données à chaque mise en service du support de données (1) et est transmise au dispositif (18) pour la vérification de validité.

14. Système selon la revendication 11, caractérisé en ce que la valeur caractéristique est comparée dans le circuit intégré du support de données (1) à des données de référence internes stockées et en ce que le fonctionnement du circuit intégré est bloqué lorsqu'un état électrique incorrect de la sécurité (4) a été constaté.

15. Système selon la revendication 14, caractérisé en ce qu'une indication d'erreur qui ne permet aucune déduction sur l'état électrique de la sécurité (4), est transmise du support de données (1) au dispositif (18) lors du blocage du fonctionnement du circuit intégré.

16. Support de données (1) présentant au moins un circuit intégré comprenant des unités de mémoire (6, 16) et des unités logiques (15), ainsi que des éléments de communication (3), caractérisé en ce qu'un montage séparé (9, 24), qui présente une propriété physique réglable et mesurable permettant une pluralité de plus de quatre états électriques possibles, est présent sur le circuit intégré, la propriété physique pouvant être réglée de façon irréversible à un état électrique significatif et celui-ci pouvant être utilisé pour produire une valeur caractéristique du support de données.

17. Support de données selon la revendication 16, caractérisé en ce que le montage (9) comprend au moins un réseau composé de composants passifs.

18. Support de données selon la revendication 16, caractérisé en ce que le montage (24) comprend au moins une sécurité (4) qui est modifiée par un processus de grillage de façon irréversible de l'état électrique conducteur à l'état électrique non-conducteur, les zones sensibles du support de données (1) étant ainsi protégées des accès extérieurs.

19. Support de données selon la revendication 18, caractérisé en ce que le support de données (1) présente des moyens (5) pour la vérification de la propriété électrique de la sécurité.
